(19) Europäisches Patentamt
European Patent Office
Office européen des brevets

(11) Veröffentlichungsnummer: **0 470 105 B1**

(12) **EUROPÄISCHE PATENTSCHRIFT**

(45) Veröffentlichungstag der Patentschrift: **27.07.94**

(51) Int. Cl.5: **C09J 119/02**, C08L 21/00, C08J 5/12

(21) Anmeldenummer: **90906190.5**

(22) Anmeldetag: **17.04.90**

(86) Internationale Anmeldenummer:
**PCT/EP90/00618**

(87) Internationale Veröffentlichungsnummer:
**WO 90/12847 (01.11.90 90/25)**

# (54) WÄSSRIGER VULKANISATIONSKLEBER.

(30) Priorität: **26.04.89 DE 3913691**

(43) Veröffentlichungstag der Anmeldung:
**12.02.92 Patentblatt 92/07**

(45) Bekanntmachung des Hinweises auf die Patenterteilung:
**27.07.94 Patentblatt 94/30**

(84) Benannte Vertragsstaaten:
**AT BE CH DE DK ES FR GB IT LI LU NL SE**

(56) Entgegenhaltungen:
**EP-A- 0 161 373**
**US-A- 4 483 962**

(73) Patentinhaber: **Henkel Kommanditgesellschaft auf Aktien**

**D-40191 Düsseldorf(DE)**

(72) Erfinder: **SCHEER, Hans**
**Am Falder 77**
**D-4000 Düsseldorf 13(DE)**
Erfinder: **BEIERSDORF, Wolf-Dieter**
**Am Dammsteg 68**
**D-4000 Düsseldorf(DE)**
Erfinder: **PURPS, Hans-Joachim**
**Wupperstra e 11**
**D-4018 Langenfeld(DE)**

EP 0 470 105 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein verbessertes wäßriges Bindemittel zum Aufvulkanisieren von unterschiedlichen Kautschuktypen auf vulkanisationsstabile Substrate.

Bei derartigen Klebern besteht zunehmend der Wunsch, die Mitverwendung von flüchtigen Substanzen wie Lösungsmitteln zu vermeiden. Es hat daher Bemühungen gegeben, lösungsmittelfreie Systeme zu formulieren. So wird im Europa-Patent 21 186 der Anmelderin vorgeschlagen, ein Homo- oder Copolymer des Vinylidenchlorids und/oder von Butadien-Acrylnitril-Copolymerisaten, aromatischen Nitrosoverbindungen, blockierten Isocyanaten, Polyvinylpyrrolidon und anderen Hilfsstoffen aufzubauen. Wenngleich derartige Produkte eingesetzt werden können, so bestand doch der Wunsch, die Bindefestigkeit gegenüber allen Kautschuktypen, auch apolaren wie Naturkautschuk, zu verbessern und die Wirtschaftlichkeit der Bindemittel zu erhöhen.

Aus der deutschen Offenlegungsschrift DE 34 25 381 ist ein Terpolymerlatex bekannt, der aus einem 2,3-Dihalogen-1,3-butadien, einem monoalkenylaromatischen Alkylhalogenid und weiteren Monomeren besteht. Dieses Terpolymer kann zusammen mit mehrfunktionellen aromatischen Nitrosoverbindungen, den auf diesem Arbeitsgebiet üblichen Feststoffen und einm Filmbildner zu einer Klebstoffzusammensetzung verarbeitet werden. Als Filmbildner sind hier auch Homo- und Copolymere des Vinylacetats beschrieben. Bindemittel zum Aufvulkanisieren von Kautschuk auf Metalle und dergleichen auf dieser Basis zeigt brauchbare Eigenschaften, jedoch wurde nunmehr gefunden, daß entscheidende Verbesserungen dann zu erzielen sind, wenn die Copolymeren des Vinylacetats oder das Vinylacetat einer teilweisen Verseifung zu den entsprechenden Polyvinylalkoholen unterzogen worden sind.

Aus dem Europapatent 161 373 sind ebenfalls bereits wäßrige Bindemittel zum Aufvulkanisieren von Kautschuk auf unter Vulkanisationsbedingungen stabile Substrate bekannt. Diese enthalten jedoch verkappte mehrfunktionelle Isocyanate. Die Mitverwendung von verkappten Isocyanaten ist nicht gewünscht, da dadurch Stabilitätsprobleme bei der Lagerung auftreten können. Die vorbekannten Bindemittel gemäß dem Europa Patent können auch Polyvinylalkohol enthalten, jedoch werden keine Ausführungen über Art und Menge des Polyvinylalkohols gemacht. Funktion des Polyvinylalkohols in derartigen Rezepturen ist lediglich die Stabilisierung der Bestandteile, d.h. Polyvinylalkohol wird als Stabilisator und nicht als Reaktiv-Komponente, die zum Aufbau des Bindemittels wesentlich beiträgt, eingesetzt.

Gegenstand der Erfindung ist daher eine wäßrige Bindemitteldispersion zum Aufvulkanisieren von Kautschuk auf unter Vulkanisationsbedingungen stabile Substrate, bestehend aus

- einem halogenierten Copolymeren, welches neben anderen Bestandteilen ein alkylierend wirkendes monoalkenyl-aromatisches Alkylhalogenid enthält,
- mehrfunktionellen aromatischen Nitrosoverbindungen
- Pigmenten, Ruß, Entschäumern, Emulgatoren und weiteren Hilfsstoffen,

dadurch gekennzeichnet, daß zur Erhöhung der Bindefestigkeit Homo- oder Copolymere des Vinylacetats, die anteilsweise verseift sind, und gewünschtenfalls weitere übliche Zusatzstoffe vorhanden sind.

Das erfindungsgemäße Bindemittel umfaßt als wichtigsten Bestandteil ein halogenhaltiges Polymer auf Basis eines alkylierenden monoalkenyl-aromatischen Alkylhalogenids. Unter diesen halogenierten Copolymeren sind Terpolymere bevorzugt, die aus

- 60 bis 97 Gew.-% eines 2,3-Dihalogen-1,3-butadiens

- 2 bis 33 Gew.-% eines monoalkenylaromatischen Alkylhalogenids mit der Formel

I.

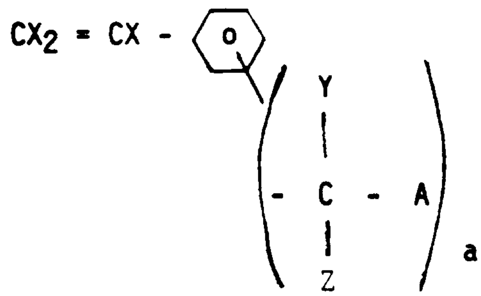

; und

II.

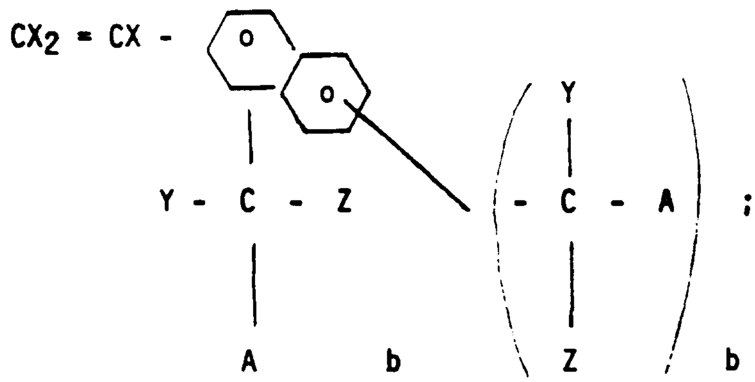

;

worin X Wasserstoff, Chlor, Brom oder Jod ist; Y Wasserstoff, Chlor oder Brom ist; Z Wasserstoff, Chlor oder Brom und A Wasserstoff, Chlor, Brom oder eine Alkylgruppe mit 1 bis 3 Kohlenstoffatomen ist, unter der Voraussetzung, daß von Y, Z oder A wenigstens eines Chlor oder Brom und, wenn A ein Alkyl ist, wenigstens eines von Y oder Z Chlor oder Brom ist, und a eins oder zwei und b null, eins oder zwei ist, unter der Bedingung, daß wenigstens ein b wenigstens eins ist; und

0,5 bis 10 Gew.-% wenigstens eines olefinisch ungesättigten Monomeren, wobei das Monomere mindestens copolymerisierbar mit da konjugierten Dienmonomeren und unterschiedlich von da aromatischen Alkylhalogenid ist.

Hinsichtlich des 2,3-Dihalogen-1,3-butadiens als konjugierten Dienmonomeren, die bekannte Handelsprodukte darstellen, wird der Halogensubstituent ausgewählt aus einer Gruppe, die aus Chlor, Brom und Jod besteht, wobei gegenwärtig Chlor der Halogensubstituent der Wahl ist.

Hinsichtlich des Gemisches aus wenigstens zwei verschiedenen ungesättigten Monomeren, die wenigstens mit dem konjugierten Dienmonomeren copolymerisierbar sind, ist festzustellen, daß diese Monomere aus einer ersten Gruppe ausgewählt werden, die aus alpha-Halogenacrylnitril, alpha-Halogenacrylsäure, alpha-Halogenacrylsäureester, alpha-Halogenvinylketon, alpha-Halogenvinylacetat, Vinylhalogenid, Vinylidenhalogenid, Styrol und monoalkenylaromatischen Alkylhalogeniden besteht, sowie aus einer zweiten Gruppe, die aus monomeren Verbindungen besteht, die wenigstens eine olefinisch ungesättigte Gruppe aufweisen, wobei die Monomeren der zweiten Gruppe sich von den Monomeren der ersten Gruppe unterscheiden.

Gegenwärtig werden Verbindungen, die die Formel I aufweisen, bevorzugt. Repräsentative monoalkenyl-aromatische Alkylhalogenid umfassen Vinylbenzylchlorid, p-Trichlormethylvinylbenzol, p-(alpha-Chlorethyl)-vinylbenzol, p-(alpha-Chlorbutyl)-vinylbenzol, alpha-Chlorvinylbenzolchlorid, 2,3-Di-(alpha-chlorethyl)-vinylbenzol, 4-Chlormethyl-vinylnaphthalin, deren korrespondierende Brom- und Iodanaloge und dergleichen. Das monalkenyl-aromatische Alkylhalogenid der Wahl ist gegenwärtig Vinylbenzylchlorid-(4-chlormethylvinylbenzol).

Hinsichtlich der zweiten Gruppe copolymerisierbarer monomerer Verbindungen sind die ethylenisch ungesättigten Verbindungen der zweiten Gruppe solche, welche durch Addition ungesättigter Bindungen polymerisierbar sind, vorausgesetzt, daß sie nicht vernetzen, d.h. es liegt entweder nur eine ungesättigte Ethylengruppe in der Verbindung vor, oder, falls mehr als eine Gruppe vorliegt, daß sie konjugiert oder kreuzweise konjugiert sind. Die ethylenisch ungesättigten Monomere, die in den verbindungemäßen Terpolymeren eingesetzt werden können, sind jene, die entweder eine einfache oder eine Vielzahl von $CH_2 = C\langle$ - Gruppen enthalten.

Die ethylenisch ungesättigten Verbindungen, die eine $CH_2 = C =$ -Gruppe oder -Gruppen enthalten, umfassen Verbindungen, wie Styrol, p-Chlorstyrol, 3,5-Dichlorstyrol, p-Methoxystyrol, Acrylonitril, Methacrylonitril, Vinylbromid, Vinylfluorld, Vinyljodid, Vinylacetat, Vinylpropionat, Vinylbutyrat, Vinylbenzoat, Vinylidenbromid, Vinylidenchlorfluorid, Meth-methacryl, Butyl-methacrylat, Meth-acrylamid, Vinylmethylketon, Vinylpyridin, Vinylcarbazol, Vinylmethylether, Isobutylen, Ethylen, Vinylchlorid, Vinylidenchlorid, Alkylacrylate, einschließlich Methyl-, Ethyl-, Propyl-, Butyl- und Octylacrylate, Acrylsäure und Methacrylsäure, sowie andere ähnliche monoolefinische polymerisierbare Verbindungen. Andere ungesättigte Verbindungen, die mehr als eine olefinische Gruppe enthalten, die copolymerisiert werden kann, um die erfindungsgemäßen Terpolymeren zu bilden, umfassen konjugierte Diene, wie Butadien-1,3, Isopren und andere Butadien-1,3-Kohlenwasserstoffe, Chloropren, sowie 3-Cyanobutyldien-1,3, ferner Triene, wie Myricen und Verbindungen, die olefinische und acetylenische Bindungen aufweisen, wie Vinylacetylen, Vinylethynyl, Diethylcarbonyl und dgl.

Der Terpolymerlatex, der erfindungsgemäß verwendet wird, kann durch Emulsionspolymerisation des halogenierten konjugierten Diens mit wenigstens zwei verschiedenen ungesättigten Comonomeren in einem wäßrigen Medium in Gegenwart eines ionischen oder eines gemischten ionischen und nichtionischen oberflächenaktiven Systems hergestellt werden, wobei die ionischen oberflächenaktiven Systeme gegenwärtig bevorzugt werden. Es hat sich herausgestellt, daß die Terpolymerprodukte, die sich bei Verwirklichung der Erfindung am besten eignen, 60 bis 97, vorzugsweise 75 bis 97 und optimal 93 bis 97 Gew.-% halogeniertes konjugiertes Dien enthalten, ferner 2 bis 33, vorzugsweise 3 bis 25 und optimal 3 bis 7 % des Monomeren der ersten Gruppe und 0,5 bis 10, vorzugsweise 2 bis 7 Gew.-% des Monomeren der zweiten Gruppe. Von besonderem Wert sind Terpolymerprodukte, die aus 2,3-Dihalogen-1,3-butadien, insbesondere 2,3-Dichlor-1,3-butadien in Menge von 80 bis 95 Gew.-%, bezogen auf Polymer, monoalkenylaromatischen Alkylhalogeniden, insbesondere Vinylbenzylchlorid in Mengen von 2 bis 10 Gew.-%, sowie olefinisch ungesättigte Monomeren, insbesondere solchen Monomeren, die wenigstens eine -COOH-Gruppe enthalten, wobei Acrylsäure, Methacrylsäure und/oder 2-Hydroxyethylmethacrylatmonophosphat in Mengen von 2 bis 10 Gew.-%, hergestellt worden sind. Dabei kann ein Teil, so z.B. 10 bis 90 mol-% der monoalkenylaromatischen Alkylhalogenide auch zur entsprechenden Hydroxyalkylverbindungen verseift werden.

Die Emulsionspolymerisation wird in einem geschlossenen Gefäß durchgeführt, in der Raum, der nicht von dem Reaktionsgemisch eingenommen wird, vorzugsweise durch eine Inertgasschicht, wie Stickstoff, frei von Sauerstoff gehalten wird, da die Induktionsperiode für die Polymerisationsreaktion durch die Gegenwart von Sauerstoff länger wird und es erwünscht ist, die Reaktion im wesentlichen in Abwesenheit von Sauerstoff durchzuführen. Allgemein ausgedrückt wird die Emulsionspolymerisation durchgeführt, indem die monomeren Bestandteile miteinander vermischt werden, das Gemisch emulgiert wird und die Emulsion mäßigen Polymerisationsbedingungen unterworfen wird, bis im wesentlichen die gesamte monomere Charge polymerisiert ist. Aus zahlreichen praktischen Gründen, die hier nicht diskutiert zu werden brauchen, ist jedoch festgestellt worden, daß die Emulsionspolymerisation des tertiären monomeren Systems mit einem halbkontinuierlichen Verfahren wirksamer durchgeführt wird, das die Zugabe einer Emulsion eines halogenierten konjugierten Diens und den Monomeren der ersten und zweiten Gruppe mit konstanter Geschwindigkeit zu einer Polymerisationszone umfaßt, die eine wäßrige Lösung oder Dispersion des Polymerisationsinitiators enthält. Die Polymerisationsbedingungen sind ansonsten im wesentlichen die gleichen wie bei ansatzweisen Polymerisationsprozessen und brauchen hier nicht diskutiert zu werden. Die Polymerisationsreaktion ist exotherm, und die Reaktionstemperatur sollte unterhalb etwa 75 °C, vorzugsweise unterhalb etwa 60 °C gehalten werden. Es kann im wesentlichen jeder freie Radiale erzeugende Katalysator oder Initiator, einschließlich der bekannten Redoxkatalysatorsysteme, wie Ammoniumpersulfat/Natriummetabisulfit, Benzylperoxid, Wasserstoffperoxid, Di-t-butylperoxid, Azo-bis-(isobutyronitril), Alkalimetallpersulfate und Alkalimetallammonium-perborate, bei der Copolymerisationsreaktion eingesetzt werden, um ein rasches Anspringen der Reaktion und reproduzierbare Ergebnisse sicherzustellen. Mach der Polymerisation können nicht-umgesetzte flüchtige Bestandteile durch Vakuumbehandlung bei erhöhter Temperatur oder Dampfdestillation entfernt werden, wobei die jeweilige Methode eine Frage der Wahl ist.

Von wesentlicher Bedeutung für die Herstellung eines Latex, der eine zufriedenstellende Adhäsion sicherstellt, ist die Auswahl der oberflächenaktiven Mittel. Es ist festgestellt worden, daß es notwendig ist,

anionische oberflächenaktive Mittel oder Gemische von anionischen und nichtanionischen oberflächenaktiven Mitteln einzusetzen, wobei diese Gemische gegenwärtig bevorzugt werden. Während kationische oberflächenaktive Mittel als solche wirksame Emulgiermittel darstellen, ist ihr Einsatz bei der Herstellung des elastomeren Terpolymerlatex nach der Erfindung entweder allein oder in Kombination mit entweder einem anionischen oder eine, nichtionischen Mittel oder mit beiden von Nachteil für die Klebeeigenschaften. Die oberflächenaktiven Systeme werden in einem Bereich zwischen 0,01 und 15 Gew.-%, vorzugsweise 1 bis 10 Gew.-%, bezogen auf das Gewicht der eingesetzten Monomere, verwendet. Die Verwendung eines gemischten anionischen, nichtionischen oberflächenaktiven Systems wird gegenwärtig bevorzugt mit einem Verhältnis von 1,2 bis 2,1 : 1, vorzugsweise 1,3 bis 2,0 : 1 anionisches zu nichtionischem Mittel durchgeführt. Repräsentative anionische Mittel sind Carboxylate, wie Fettsäureseifen aus Laurin-, Stearin- und Oleinsäure- sowie Acyl-Derivaten von Sarcosin, wie Methylglycin; Sulfate, wie Natriumlaurelsulfat; sulfatierte natürliche Öle und Ester, wie Türkisch-Rotöl und Alkylarylpolyethersulfate; Alkylaryl-polyethersulfonate; Isopropylnaphthalinsulfonate und Sulfosuccinate sowie Sulfosuccinanate; Phosphatester, wie partielle Ester komplexer Phosphate mit kurzkettigen Fettalkoholen; und Orthophosphatester von polyethoxylierten Fettalkoholen. Repräsentative nichtionische Mittel umfassen ethoxylierte (Ethylenoxid-Derivate), ein- und mehrwertige Alkohole, Ethylenoxid/Propylenoxid-Blockcopolymere; Ester, wie Glycerin-monostearat; Produkte der Dehydratisierung von Sorbitol, wie Sorbitanmostearat und Polyethylenoxid-sorbitan-monolaurat; und Amine, wie Laurinsäure, Isopropenylhalogenid. Gegenwärtig wird ein 1,8 : 1-Gemisch von Natriumdodecyldiphenylether-disulfonat als anionischem oberflächenaktivem Mittel und Nonylphenylpolyethylenglykol als nichtionischem oberflächenaktivem Mittel bevorzugt. Anionische und anionisch-nichtionische oberflächenaktive Systeme, die erfindungsgemäß verwendet werden müssen, sind im einzelnen beschrieben in "Emulsions: Theory and Practice", von Paul Becher, Kapitel 6, Reinhold Publishing Corporation, New York, 1965, sowie in McCutcheon's "Detergents and Emulsifiers, 1972 Annual".

Der Terpolymerlatex, der durch die Emulsions-Copolymerisation halogenierter Diene und ungesättigter Monomere der ersten und der zweiten Gruppe erfindungsgemäß erhalten wird, weist im allgemeinen einen pH im Bereich zwischen 2 und 3 auf. Es ist möglich, aber nicht bevorzugt, den pH auf einen Wert im Bereich zwischen etwa 4 und 11, vorzugsweise 6 und 10, mit Säurefängern oder Puffern, wie Zinkoxid, dibasischem Bleiphophat, Natriumacetat-Essigsäure-Gemischen und dgl. einzustellen, wobei dibasisches Bleiphosphat gegenwärtig der Säurefänger der Wahl ist. Derartige Stabilisatoren werden selbstverständlich in einer Menge eingesetzt, die ausreicht, um den gewünschten pH-Wert zu erhalten, da Überschüsse eher stören.

Die erfindungsgemäßen Bindemittel enthalten als weiteren wichtigen Bestandteil aromatische Nitrosoverbindungen. Die aromatischen Nitrosoverbindungen, die sich bei Durchführung der Erfindung eignen, sind irgendwelche aromatischen Kohlenwasserstoffe, wie Benzol, Naphthalin, Anthracen und Diphenyl, die wenigstens zwei Nitrosogruppen, die direkt aneinander nicht benachbarte Ringkohlenstoffatome gebunden sind, enthalten. Derartige Nitrosoverbindungen werden als aromatische Poly-C-nitrosoverbindungen mit 1 bis 3 aromatischen Kernen, einschließlich miteinander verschmolzener aromatischer Kerne, mit 2 bis 6 Nitrosogruppen, die direkt aneinander nicht benachbarte Ringkohlenstoffatome gebunden sind, bezeichnet. Die gegenwärtig bevorzugten Poly-C-nitrosomaterialien sind die aromatischen Nitrosoverbindungen, insbesondere die Dinitrosobenzole und Dinitrosonaphthaline, wie die meta- oder para-Dinitrosobenzole und die meta- oder para-Dinitrosonaphthaline. Die Ringswasserstoffatome des aromatischen Kerns können durch Alkyl-, Alkoxy, Cycloalkyl-, Aryl-, Arylnitroso-, Halogen- und dgl. Gruppen ersetzt sein. Die Gegenwart derartiger Substituenten an dem aromatischen Kern hat wenig Einfluß auf die Aktivität der Poly-C-nitrosoverbindungen nach der Erfindung. Soweit bisher festgestellt worden ist, gibt es keine Beschränkung hinsichtlich der Art des Substituenten, der organischer oder anorganischer Natur sein kann. Demgemäß sind, wenn auf die "aromatische" Poly-C-nitrosoverbindung, "Benzol" oder "Naphthalin" Bezug genommen wird, darunter sowohl substituierte als auch nichtsubstituierte Nitrosoverbindungen usw. zu verstehen, falls nichts anderes angegeben ist.

Eine partielle nicht-einschränkende Liste geeigneter Poly-C-nitrosoverbindungen, die sich zur Durchführung der Erfindung eignen, umfaßt m-Dinitroso-benzol, p-Dinitroso-benzol, m-Dinitroso-naphthalin, p-Dinitroso-naphthalin, 2,5-Dinitroso-p-cymol, 2-Methyl-1,4-dinitroso-benzol, 2-Methyl-5-chloro-1,4-dinitroso-benzol, 2-Fluoro-1,4-dinitroso-benzol, 2-Methoxy-1,3-dinitroso-benzol, 5-Chloro-1,3-dinitroso-benzol, 2-Benzyl-1,4-dinitroso-benzol und 2-Cyclohexyl-1,4-dinitroso-benzol.

Die erfindungsgemäßen Bindemittel enthalten als charakteristischen Bestandteil weiterhin Homo- oder Copolymere des Vinylacetats, das anteilsweise verseift sind. Derartige Verbindungen werden hier als Polyvinylalkohol bezeichnet. Die Mengen liegen bei 1 bis 15 Gew.-%, vorzugsweise 1,5 bis 5 Gew.-%, bezogen auf Bindemittel. Der Verseifungsgrad der hier eingesetzten Polyvinylalkohole, d.h. die prozentuale Anzahl der Hydroxylgruppen, bezogen auf die ursprünglich vorhandenen Acetatgruppen liegt zwischen 40

und 98 %. Besonders günstige Ergebnisse werden erhalten bei Verseifungsgraden zwischen 80 und 90 %.

Geeignete Polyvinylalkohole leiten sich zum einen von Vinylacetat-Homopolymeren und zum andern von dessen Copolymeren ab. Geeignete Copolymere sind Copolymere des Vinylacetats mit Olefinen, halogenierten Olefinen, Vinylethern, olefinisch ungesättigten Mono- oder Dicarbonsäuren und/oder der in eingeschränktem Maße auch deren Estern. Bevorzugt sind daher neben den Verseifungsprodukten von Polyvinylacetat Verseifungsprodukte von Polyvinylacetat-co-vinylbutyrat, Verseifungsprodukte von Vinylacetat-ethylen-vinylchloridCopolymeren, Verseifungsprodukte von Vinylacetat-Acrylsäureestern, von Vinylacetat-Maleinsäure-dibutylester-Copolymeren von Vinylacetat-Styrolacrylsäureester-Copolymeren und von Vinylacetat-Acrylsäure-methylester-Copolymeren. Auch Copolymere aus Vinylacetat, Ethylen und Vinylidenchlorid mit den angegebenen Verseifungsgraden sind geeignet. Bei den genannten Copolymeren beträgt der Vinylacetatgehalt in mol-% des Gesamtcopolymeren mehr als 30 mol-%, vorzugsweise ihr als 50 mol-% und insbesondere mehr 70 mol-%.

Zwar kann zum gegenwärtigen Zeitpunkt keine theoretische Erklärung der erfindungsgemäß gefundenen Effekte gegeben werden, doch dürften die Hydroxylgruppen der Polyvinylalkohole, die gemäß Erfindung zugegen sein müssen, beim Entstehen der Bindung unter Vulkanisationsbedingungen mit den anderen Bestandteilen reagieren.

Erfindungsgemäß wurden günstige Ergebnisse mit Polyvinylalkoholen, die ein Molgewicht zwischen 14000 und 100000 aufwiesen, erzielt. Dabei zeigte sich, daß die Größe des Molgewichts für das erzielte Ergebnis nur von geringer Bedeutung ist. Der Fachmann kann jedoch durch Erhöhung des Molgewichts die Viskosität erhöhen und damit die Verarbeitungseigenschaften des Bindemittels verändern. Doch hat sich gezeigt, daß Bindemittel auf Basis höhermolekularer Polyvinylalkohole eine bessere Haftung des noch nicht gehärteten Bindemittelfilms auf Metallen oder Primer aufweisen, was für automatisierte Verarbeitungsvorgänge oftmals gewünscht ist. Für einen derartigen Einsatz haben sich Bindemittel bewährt, bei denen der Polyvinylalkohol Molekulargewichte zwischen 30000 und 75000 aufweist, so daß dieser Molgewichtsbereich als bevorzugt gelten kann.

Mengenmäßig enthalten die erfindungsgemäßen Bindemittel vorzugsweise 5 bis 20 Gew.-% halogeniertes Polymer, 2 bis 20 Gew.-% zumindest einer mehrfunktionellen aromatischen Nitrosoverbindung, 0,2 bis 15 Gew.-% Polyvinylalkohole und 0,2 bis 6 Gew.-% Hilfsstoffe. Der Rest, ad 100 Gew.-%, ist Wasser. Der Gesamtfeststoffgehalt der Zubereitungen liegt zwischen 10 und 50 Gew.-%, vorzugsweise zwischen 20 und 30 Gew.-%.

Die erfindungsgemäßen Dispersionen können weiterhin noch übliche haftverbessernde Füllstoffe enthalten. Es kommen hier insbesondere Ruß in Mengen von 0,2 bis 10 Gew.-%, Zinkoxid in Mengen von 0,1 bis 10 Gew.-% oder gewünschtenfalls basisches Bleiphosphit und dergleichen mehr in Frage. Weiterhin können Pigmente eingearbeitet werden. Ein weiterer Vorteil der erfindungsgemäßen Bindemittel ist darin zu sehen, daß die verkappten Isocyanatverbindungen, wie sie beispielsweise im Bindemittel gemäß der deutschen Patentschrift 29 23 651 und in der deutschen Patentanmeldung DE 34 00 851 als unentbehrlich in derartigen Zubereitungen beschrieben werden, nicht mitverwendet werden brauchen. Die Mitverwendung derartiger geblockter Isocyanate ist technisch meist kritisch für die Haltbarkeit der Bindemittel, insbesondere bei erhöhten Temperaturen, wie sie im Sommer in Lagerhallen auftreten können. Zur Herstellung der erfindungsgemäßen Bindemittel stellt man zunächst durch Emulsionscopolymerisation einen Latex des halogenierten Polymeren auf Basis eines alkylierenden monoalkenylaromatischen Alkylhalogenids her. Diesem Latex werden die anderen Bestandteile und gewünschtenfalls noch Wasser zugegeben. Nach Vordispergierung in eine geeignete Einrichtung wird dann in einer Kugelmühle bis zu einem Malgrad kleiner 2 mils vermahlen.

Die erfindungsgemäßen wäßrigen Bindemittel eignen sich zum Verbinden vulkanisierbarer Elastomerer mit einer Vielzahl von Substraten, so beispielsweise mit zahlreichen Metallen wie Eisen, rostfreier Stahl, Blei, Aluminium, Kupfer, Messing, Bronze, Monel-Metalle, Nickel, Zink und dgl.. Sie sind ebenfalls geeignet für behandelte Metalle, wie phosphatierten Stahl, galvanisierten Stahl und können ebenfalls bei Glas und Keramik-Materialien sowie bei hochschmelzenden Kunststoffen wie beispielsweise Aramid-Fasern eingesetzt werden. Hervorzuheben ist die günstige Wirkung insbesondere beim Aufvulkanisieren polarer Kautschuke, z.B. von Nitrilkautschuk auf Aramid-Fasern oder Metalle.

Die Bindemittel werden auf die Substratoberflächen in konventioneller Weise, etwa durch Eintauchen, Aufsprühen, Aufbürsten und dgl. aufgetragen. Unter Umständen kann es zweckmäßig sein, eine Vorbehandlung mit einem haftverbessernden Mittel (Primer) aus chloriertem Kautschuk, Phenolharz oder dgl. durchzuführen. Die Substratoberflächen werden nach dem Beschichten trocknen gelassen, bevor sie zusammengebracht werden. Nachdem die Oberflächen zusammengefügt worden sind, werden die Verbundstrukturen in konventioneller Weise erhitzt, um die Vulkanisation herbeizuführen.

## Beispiele

In den Prüfungen wurde das erfindungsgemäße Produkt auf seine grundsätzlichen Bindefähigkeiten untersucht bzw. zur bisherigen Qualität im Vergleich getestet.

Als Prüfmethoden dienten Normprüfverfahren wie ASTM-D 429, Methode A bzw. Methode B.

Die Metallvorbehandlung erfolgte in üblicher Weise.

Vulkanisiert wurde in der Presse unter den in den Tabellen aufgeführten Vulkanisationsbedingungen. Im Anschluß an die Vulkanisation wurden alle Verbundkörper ca. 24 Stunden gelagert und hiernach den einzelnen Prüfungen unterzogen.

Von den in Tabelle 1 aufgeführten Rezepturen entsprechen No. 1 bis 3 den erfindungsgemäßen wäßrigen Bindemitteln während Rezeptur No. 4 ein Produkt gemäß EP 161 373 darstellt.

Für alle Prüfungen wurde das wäßrige Bindemittel über einem Primer (Phenolharz-Basis) aufgetragen.

## Standard-Binde- und Korrosionsprüfung

Mit der hier angewendeten Prüfmethode wird die Scherfestigkeit des Verbundes ermittelt und gleichzeitig das entstandene Reißbild beurteilt.

Im Korrosionstest werden die Verbundteile 2 h in Wasser bei 95 - 98 °C gelagert unter gleichzeitiger Belastung der Bindenaht mit 2 kg/in.

Die in Tabelle 2 aufgeführten Ergebnisse zeigen sowohl in der Bindeals auch in der Korrosionsprüfung für alle angewendeten Kautschukmischungen mit 100 R (100 R = 100 %iger Bruch im Gummi (Rubber) eine einwandfreie Haftung und Beständigkeit.

## Zugprüfung

Die Prüfung nach ASTM-D 429, Methode A bestimmt die Zugscherfestigkeit eines Gummi/Metall-Verbundes.

Das Ergebnis dieser Prüfung, siehe Tabelle 3, zeigt, daß mit allen Kautschukmischungen auch in der Zugprüfung stets ein 100 %iger Bruch im Gummi erreicht wird. Die unterschiedlichen Festigkeitswerte sind mischungsbedingt.

## Vorheizbeständigkeit

Zur Prüfung der Vorheizbeständigkeit wurden die beschichteten Prüfbleche für die Dauer der Vorheizzeit bei 153 °C in die Vulkanisierform eingelegt und hiernach direkt an die NR-Mischung vulkanisiert.

Die in der Tabelle 4 dargestellten Reißbilder zeigen eine deutlich bessere Vorheizbeständigkeit für das Bindemittel No. 3 im Vergleich zu No. 4. Schon bei 8-minütiger Temperaturbelastung ist mit dem Bindemittel No. 4 keine sichere Bindung mehr möglich. Das Bindemittel No. 3 läßt noch nach 14 min Vorheizen eine einwandfreie Bindung zu.

## Hydrolysebeständigkeit

Die Automobilindustrie fordert für EPDM-Verbundteile im Kühlbereich eine Beständigkeit gegen Glysantin$^{(R)}$/Wasser (1 : 1) bei 135 °C über 42 Stunden.

Für Motorlager (NR-Verbund) werden 7 Tage bei 130 °C gegen Dämpferflüssigkeit (Glykosafe$^{(R)}$610, BASF) gefordert.

Mit den Bindemitteln No. 3 und No. 4 wurden unterschiedliche EPDM- bzw. NR-Mischungen gebunden und den beschriebenen Beständigkeitsprüfungen unterzogen.

Tabelle 5 zeigt die deutliche Überlegenheit des Bindemittels No. 3 im Vergleich mit No. 4.

## Kochendwasserbeständigkeit

Der Kochendwassertest (wie bereits beschrieben) zeigt neben den angeführten Hydrolysetests deutlich, inwieweit eine sichere Bindung gegeben ist.

Wie in Tabelle 6 dargestellt, werden alle NR-Mischungen mit dem Bindemittel No. 3 so gut gebunden, daß eine einwandfreie Kochendwasserbeständigkeit erzielt wird. Das Bindemittel No. 4 versagt hier völlig.

Die beschriebenen Versuche haben gezeigt, daß mit dem bisher bekannten Bindemittel, Europatent 0 161 373, nur eine begrenzte Haftung und eine sehr mangelhafte Beständigkeit erzielt wird.

Im Gegensatz hierzu führt das erfindungsgemäße Bindemittel in allen Prüfungen zu einem einwandfreien Ergebnis. Die hiermit erzielten Beständigkeiten gegen Glysantin(R) bzw. Glykosafe(R)610 sind besonders bemerkenswert.

Zusätzlich erfüllt das erfindungsgemäße Bindemittel auch die gestellten Forderungen an das Spritzverhalten, Spritzbild, die Sedimentation bzw. Substrathaftung und die Abschiebefestigkeit.

Die in Tabelle 1 angeführten Bindemittel No. 1 und No. 2 entsprechen im Binde- und Beständigkeitsverhalten dem ausführlich dargestellten Bindemittel No. 3. Lediglich in der Viskosität bzw. im Thixotropierverhalten sind sie der No. 3 unterlegen. Deshalb wurde auf breite Darstellung verzichtet.

Die chemischen Bezeichnungen der Handelsprodukte finden sich im Anschluß an die Tabellen.

**Rezeptur der NR-Mischung**

| Mischungsbestandteile | |
|---|---|
| NR SMR 5 CV 60 | 100 Teile |
| Stearinsäure | 2 " |
| Vulkanox(R)HS | 1 " |
| ZnO RS | 10 " |
| Fichtenteer | 2 " |
| CK 3 | 25 " |
| Vulkacit(R)L | 0,33 " |
| Vulkacit(R)DM | 0,58 " |
| Schwefel | 2,75 " |

Vulkanisation: 153 °C, 10 min

**Rezeptur der SBR-Mischung**

| Mischungsbestandteile | |
|---|---|
| Buna Hüls(R)1500 | 100 Teile |
| Stearinsäure | 1 " |
| ZnO RS | 5 " |
| Corax(R)3 | 50 " |
| Paraflux(R) | 8 " |
| Vulkacit(R)CZ | 0,95 " |
| Schwefel | 1,6 " |

Vulkanisation: 153 °C, 30 min

**Rezeptur der NBR-Mischung**

| Mischungsbestandteile | |
|---|---|
| Perbunan(R) N 3807 | 100 Teile |
| Hycar(R) 1312 | 10 " |
| Alnovol(R) Ph 809 | 15 " |
| Vulkanox(R) MB | 1 " |
| Vulkanox(R) AP | 1 " |
| ZnO aktiv | 5 " |
| Arovel(R) FEF | 20 " |
| Regal(R) R | 35 " |
| Stearinsäure | 1 " |
| Winnofil S | 20 " |
| Vulkacit CZ | 1 " |
| Vulkacit Thiuram | 3 " |
| Schwefel | 0,2 " |

Vulkanisation: 153 °C, 15 min

**Rezeptur der IIR-Mischung**

| Mischungsbestandteile | |
|---|---|
| Esso-Butyl(R) 325 | 100 Teile |
| Stearinsäure | 1 " |
| ZnO RS | 5 " |
| Corax(R) 3 | 50 " |
| Vulkacit(R) DM | 1 " |
| Ethyl-Tellurac | 1,5 " |
| Schwefel | 1 " |

Vulkanisation: 160 °C, 30 min

**Rezeptur der CR-Mischung**

| Mischungsbestandteile | |
|---|---|
| Baypren(R) 110 | 50 Teile |
| Baypren(R) 210 | 50 " |
| Stearinsäure | 0,5 " |
| MgO leicht | 4 " |
| Vulkanox(R) MB | 0,5 " |
| Vulkanox(R) 4010 NA | 1 " |
| Ozonschutzmittel AFD | 0,5 " |
| Ozonschutzwachs 111 | 1 " |
| Thermax(R) MT | 140 " |
| Ingraplast(R) S | 10 " |
| Rhenosorb(R) C | 5 " |
| ZnO RS | 5 " |
| Vulkacit Thiuram(R)MS | 1 " |
| Vulkacit(R) DOTG | 1 " |
| Schwefel | 0,5 " |

Vulkanisation: 160 °C, 20 min

**Rezeptur der EPDM-Mischung No. 1**

| Mischungsbestandteile | |
|---|---|
| Keltan(R) 512 | 100 Teile |
| Stearinsäure | 0,5 " |
| Vulkanox(R) HS | 1,5 " |
| ZnO RS | 5 " |
| Corax(R) 3 | 90 " |
| Gulf security(R)320 | 50 " |
| BDMA(R) | 1,5 " |
| Perkadox(R) 14/40 | 8,5 " |

**Vulkanisation: 160 °C, 25 min**

**Tabelle 1**

| Bindemittelrezeptur | | 1 | 2 | 3 |
|---|---|---|---|---|
| RD 3379-30 (1) | (Lord Corp.) | 34,6 % | 34,6 % | 34,6 % |
| RD 3435-49 (100 %ig) (2) | (Lord Corp.) | 7,3 % | 7,3 % | 7,3 % |
| Z 930 (3) | (Henkel) | - | - | - |
| Mowiol(R) 18/88 (4) | (Hoechst) | 0,2 % | 0,9 % | 1,9 % |
| Mowilith(R) DM 120 (50 %ig) (5) | (Hoechst) | 3,4 % | 2,0 % | - |
| Ruß Corax 3 | (Degussa) | 1,8 % | 1,8 % | 1,8 % |
| Zinkoxid Hansa extra(R) | (Lehm. & Voss) | 0,9 % | 0,9 % | 0,9 % |
| Wasser (dest.) | | 51,8 % | 52,5 % | 53,5 % |

(1) Terpolymer-Latex aus 2,3-Dichlor-1,3-Butadien/Vinylbenzylchlorid/Acrylsäure
(2) p-Dinitrosobenzol
(3) Verkapptes Isocyanat aus Rütapox 0300 mit Desmodur 44
(4) Polyvinylalkohol
(5) Copolymerisat-Dispersion Vinylacetat/Ethylen/Vinylchlorid, teilweise verseift

Als Vergleichsbeispiel (4) wurde ein Bindemittel gemäß EP 161 373 eingesetzt.

## Tabelle 2

## Standard-Binde- und Korrosionsprüfung

**Substrat:** Stahl

**Prüfmethode:** ASTM-D 429, Methode B

**Bindemittel:** No. 3 über Primer

| Mischung | Bindeprüfung Haftwert | Bindeprüfung Rißbild | Kochendwassertest |
|---|---|---|---|
| NR | 42 daN/in | 100 R | 100 R |
| SBR | 80 daN/in | 100 R | 100 R |
| CR | 35 daN/in | 100 R | 100 R |
| EPDM | 55 daN/in | 100 R | 100 R |
| IIR | 48 daN/in | 100 R | 100 R |
| NBR | 45 daN/in | 100 R | 100 R |

### Rohstoffschlüssel

| | |
|---|---|
| Vulkacit(R)L | (Zink-N-dimethyldithiocarbamat) |
| Vulkacit(R)DM | (Dibenzothiazyldisulfid) |
| Vulkacit(R)CZ | (Benzothiazyl-2-cyclohexylsulfinamid) |
| Vulkacit(R)Thiuram MS | (Tetramethylthiurammonosulfid) |
| Vulkacit(R)Thiuram | (Tetramethylthiuramdisulfid) |
| Vulkacit(R)DOTG | (Di-otho-tolylguanidin) |
| Ethyl-Tellural(R) | (Tellur-diethyldithiocarbamat) |

| | |
|---|---|
| Vulkanox(R)HS | (2,2,4-Trimethyl-1,2-dihydrochinolin, polymer) |
| Vulkanox(R)MB | (2-Mercaptobenzimidazol) |
| Vulkanox(R)4010 NA | (N-Isopropyl-N'-phenyl-p-phenylendiamin) |
| Vulkanox(R)AP | (Kondensationsprod. aus Aldol/Naphthylamin) |
| Ozonschutzwachs III | (Gemisch verschiedener Kohlenwasserstoffe) |
| Ozonschutzmittel AFD | (ungesättigter Ether) |
| Corax(R)3 | (Ruß ASTM N 330) |
| CK(R)3 | (Ruß ASTM S 300) |
| Arovel(R)FFF | (Ruß ASTM H 550) |
| Regal(R)R | (Ruß ASTM N 774) |
| Thermax(R)MT | (Ruß ASTM N 990) |
| Gulf Security(R)320 | (paraff. Mineralöl) |
| Fichtenteer | (Fichtenholzteer) |
| Paraflux(R) | (gesättigte, polymerisierte Erdölkohlenwasserstoffe) |
| Ingarplast(R)S | (naphthenisches Mineralöl) |
| Winnofil(R)S | (Calciumcarbonat mit Calciumstearat überzogen) |
| Rhenosorb(R)C | (Calciumoxid) |
| BDMA(R) | (Butylglykol-dimethacrylat) |
| Perkadox(R)14/40 | (1,3-Bis-(t-Butylperoxyisopropyl)benzol) |

Tabelle 3

**Zugprüfung**

Substrat: Stahl

Prüfmethode: ASTM-D 429, Methode A

Bindemittel: No. 3 über Primer

| Mischung | Haftwert | Rißbild |
|---|---|---|
| NR | 6,2 MPa | 100 R |
| SBR | 10,2 MPa | 100 R |
| CR | 5,8 MPa | 100 R |
| EPDM | 4,9 MPa | 100 R |
| IIR | 8,9 MPa | 100 R |
| NBR | 6,4 MPa | 100 R |

**Tabelle 4**

**Vorheizbeständigkeit**

| | |
|---|---|
| Substrat: | Stahl |
| Prüfmethode: | ASTM-D 429, Methode B |
| Bindemittel: | alternativ No. 3 bzw. No. 4 über Primer |
| Bindemittelschichtdicke: | jeweils ca. 18 - 20 $\mu$ |
| Mischung: | NR |
| Vulkanisation: | 153 °C |

| Vorheizzeit | Bindemittel No. 3 | Bindemittel No. 4+) |
|---|---|---|
| 8 min | 100 R | 90 R |
| 10 min | 100 R | 40 R |
| 12 min | 100 R | 10 R |
| 14 min | 100 R | 0 R |
| 16 min | 80 R | 0 R |

+) Vergleichsbeispiel gemäß EP 161 373

## Tabelle 5

### Hydrolysebeständigkeit

| | |
|---|---|
| Substrat: | Stahl |
| Prüfmethode: | ASTM-D 429, Methode B |
| Bindemittel: | No. 3 bzw. No. 4 über Primer |

Glysantin(R)/Wasser (1 : 1), 3 Tage, 135 °C

| Mischung | Bindemittel No. 3 | Bindemittel No.4+) |
|---|---|---|
| EPDM-No. 1 | 100 R | 10 R |
| EPDM-No. 2 | 100 R | 0 R |
| EPDM-No. 3 | 95 R | 0 R |

Glykosafe(R) 610, 7 Tage, 130 °C

| Mischung | Bindemittel No. 3 | Bindemittel No. 4 |
|---|---|---|
| NR-No. 1 | 100 R | 90 R |
| NR-No. 2 | 100 R | 90 R |
| NR-No. 3 | 100 R | 20 R |
| NR-No. 4 | 100 R | 30 R |

+) Vergleichsbeispiel gemäß EP 161 373

## Tabelle 6

### Kochendwasserbeständigkeit

**Substrat:** Stahl
**Prüfmethode:** ASTM-D 429, Methode B
**Bindemittel:** No. 3 bzw. No. 4 über Primer

| Mischung | Bindemittel No. 3 | Bindemittel No. 4+ |
|---|---|---|
| NR-No. 1 | 100 R | 0 R |
| NR-No. 2 | 100 R | 0 R |
| NR-No. 3 | 100 R | 0 R |
| NR-No. 4 | 100 R | 0 R |

+) Vergleichsbeispiel gemäß EP 161 373

## Patentansprüche

1. Wäßrige, von verkappten Isocyanaten freie Bindemitteldispersion zum Aufvulkanisieren von Kautschuk auf unter Vulkanisationsbedingungen stabile Substrate, bestehend aus
einem halogenierten Copolymeren auf Basis eines alkylierend wirkenden monoalkenylaromatischen Alkylhalogenids,
mehrfunktionellen aromatischen Nitrosoverbindungen,
Pigmenten, Ruß, Entschäumern, Emulgatoren und weiteren Hilfsstoffen, sowie
(zur Erhöhung der Bindefestigkeit) Homo- oder Copolymeren des Vinylacetats, die teilweise verseift sind.

2. Bindemitteldispersion nach Anspruch 1, dadurch gekennzeichnet, daß sie, bezogen auf Gesamtdispersion, enthält:
   - 5 bis 20 Gew.-% des halogenierten Copolymeren
   - 2 bis 20 Gew.-% der mehrfunktionellen aromatischen Nitrosoverbindungen
   - 1 bis 15 Gew.-% der teilweise verseiften Homo- oder Copolymeren des Vinylacetats,
   - 0,2 bis 15 Gew.-% Pigmente, Ruß, Entschäumer, Emulgatoren und/oder weitere Hilfsstoffe und
   - ad 100 Gew.-% Wasser.

3. Bindemitteldispersion nach einem der Ansprüche 1 oder 2, dadurch gekennzeichnet, daß als Copolymere des Vinylacetats Copolymere von Vinylacetat mit Olefinen, halogenierten Olefinen, Vinylethern, olefinisch ungestättigten Carbonsäuren und/oder Dicarbonsäuren und/oder deren Estern eingesetzt werden.

4. Bindemitteldispersion nach einem der Ansprüche 1 bis 3, dadurch gekennzeichnet, daß die Homo- oder Copolymeren des Vinylacetats zu 40 bis 98 %, vorzugsweise zu 80 bis 90 %, der ursprünglich vorhandenen Acetatgruppen zu den entsprechenden Polyvinylalkoholen verseift sind.

5. Bindemitteldispersion nach einem der Ansprüche 1 bis 4, dadurch gekennzeichnet, daß die teilweise verseiften Homo- oder Copolymeren des Vinylacetats Molgewichte von 14000 bis 100000, vorzugsweise 30000 bis 75000, aufweisen.

6. Bindemitteldlspersion nach einem der Ansprüche 1 bis 5, dadurch gekennzeichnet, daß die halogenierten Polymeren auf Basis eines alkylierenden monoalkenylaromatischen Alkylhalogenids bestehen aus
   - 60 bis 97 Gew.-% wenigstens eines 2,3-Dihalogen-1,3-butadiens;
   - 2 bis 33 Gew.-% wenigstens eines monoalkenylaromatischen Alkylhalogenids mit der Formel

I.

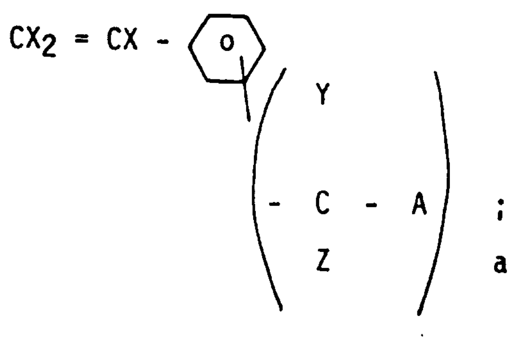

oder

II.

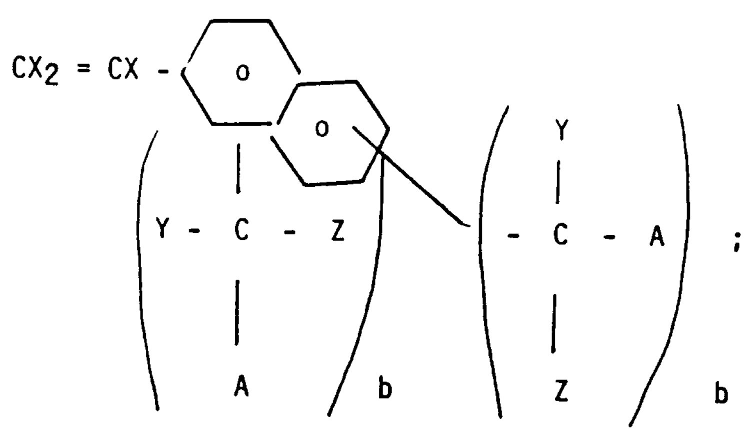

worin X Wasserstoff, Chlor, Brom oder Jod ist; Y Wasserstoff, Chlor oder Brom ist; Z Wasserstoff, Chlor oder Brom und A Wasserstoff, Chlor, Brom oder eine Alkylgruppe mit 1 bis 3 Kohlenstoffatomen ist, unter der Voraussetzung, daß von Y, Z und A wenigstens eines Chlor oder Brom und, wenn A ein Alkyl ist, wenigstens eines von Y und Z Chlor oder Brom ist, und a eins oder zwei und b null, eins oder zwei ist, unter der Bedingung, daß wenigstens ein b wenigstens eins ist; und
   - 0,5 bis 10 Gew.-% wenigstens eines olefinisch ungesättigten Monomeren, das mindestens copolymerisierbar mit dem konjugierten Dienmonomeren und unterschiedlich von dem aromatischen Alkylhalogenid ist.

7. Bindemitteldispersion nach einem der Ansprüche 1 bis 6, dadurch gekennzeichnet, daß die halogenierten Polymeren auf Basis eines alkylierenden monoalkenylaromatischen Alkylhalogenids als weitere Bestandteile carbonsäuregruppentragende Monomere enthalten.

**8.** Bindemitteldispersion nach einem der Ansprüche 1 bis 7, dadurch gekennzeichnet, daß die halogenierten Polieren auf Basis eines alkylierenden monoalkenylaromatischen Alkylhalogenids bestehen aus
80 bis 95 Gew.-% Dichlorbutadien, insbesondere 2,3-Dichlor-1,3-butadien,
2 bis 10 Gew.-% Acryl- und/oder Methacrylsäure und
2 bis 10 Gew.-% Vinylbenzylchlorid.

**9.** Bindemitteldispersion nach einem der Ansprüche 1 bis 8, dadurch gekennzeichnet, daß die halogenierten Polymeren auf Basis eines alkylierenden monoalkenylaromatischen Alkylhalogenids teilweise zur entsprechenden Hydroxyalkylverbindung verseift sind.

**10.** Bindemittel nach den Ansprüchen 1 bis 9, dadurch gekennzeichnet, daß als mehrfunktionelle aromatische Nitrosoverbindungen Dinitrosobenzole, insbesondere 1,3- bzw. 1,4-Dinitrosobenzol eingesetzt werden.

## Claims

**1.** A water-based binder dispersion free from masked isocyanates for vulcanizing rubber onto vulcanisation-stable substrates consisting of
a halogenated copolymer based on an alkylating aromatic monoalkenyl alkyl halide,
polyfunctional aromatic nitroso compounds,
pigments, carbon black, foam inhibitors, emulsifiers and other auxiliaries and
(for increasing bond strength) partly saponified homopolymers or copolymers of vinyl acetate.

**2.** A binder dispersion as claimed in claim 1, characterized in that, based on the dispersion as a whole, it contains

- 5 to 20% by weight of the halogenated copolymer,
- 2 to 20% by weight of the polyfunctional aromatic nitroso compound,
- 1 to 15% by weight of the partly saponified homopolymers or copolymers of vinyl acetate,
- 0.2 to 15% by weight pigments, carbon black, foam inhibitors, emulsifiers and/or other auxiliaries and
- balance to 100% by weight water.

**3.** A binder dispersion as claimed in claim 1 or 2, characterized in that copolymers of vinyl acetate with olefins, halogenated olefins, vinyl ethers, olefinically unsaturated carboxylic acids and/or dicarboxylic acids and/or esters thereof are used as the copolymers of vinyl acetate.

**4.** A binder dispersion as claimed in any of claims 1 to 3, characterized in that 40 to 98% and preferably 80 to 90% of the acetate groups originally present in the homopolymers or copolymers of vinyl acetate are saponified to the corresponding polyvinyl alcohols.

**5.** A binder dispersion as claimed in any of claims 1 to 4, characterized in that the partly saponified homopolymers or copolymers of vinyl acetate have molecular weights in the range from 14,000 to 100,000 and preferably in the range from 30,000 to 75,000.

**6.** A binder dispersion as claimed in any of claims 1 to 5, characterized in that the halogenated polymers based on an alkylating aromatic monoalkenyl alkyl halide consist of

- 60 to 97% by weight of at least one 2,3-dihalo-1,3-butadiene;
- 2 to 33% by weight of at least one aromatic monoalkenyl alkyl halide corresponding to the formula

I.

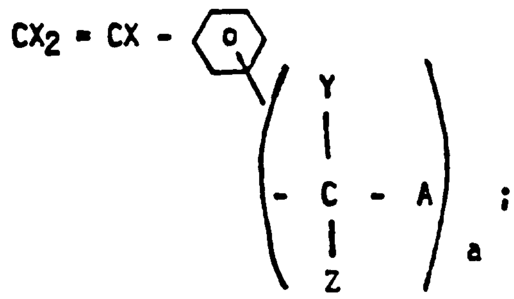

or

II.

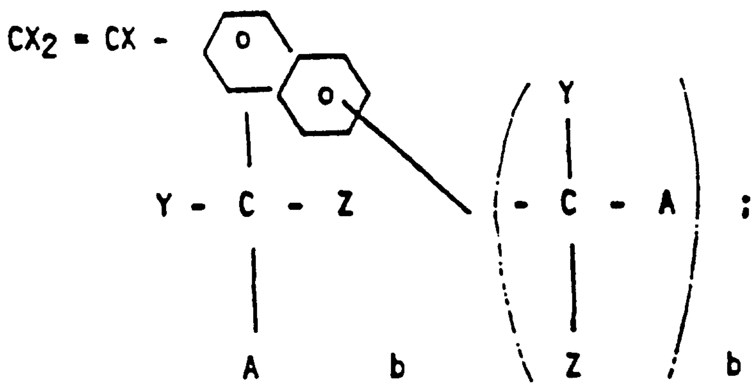

in which X is hydrogen, chlorine, bromine or iodine; Y is hydrogen, chlorine or bromine; Z is hydrogen, chlorine or bromine and A is hydrogen, chlorine, bromine or a $C_{1-3}$ alkyl group, with the proviso that, of Y, Z and A, at least one is chlorine or bromine and, where A is an alkyl group, at least one of Y and Z is chlorine or bromine, and a = 1 or 2 and b = 0, 1 or 2, with the proviso that at least one b is at least 1; and

- 0.5 to 10% by weight of at least one olefinically unsaturated monomer which is at least copolymerizable with the conjugated diene monomer and different from the aromatic alkyl halide.

**7.** A binder dispersion as claimed in any of claims 1 to 6, characterized in that the halogenated polymers based on an alkylating aromatic monoalkenyl alkyl halide contain monomers bearing carboxylic acid groups as further constituents.

**8.** A binder dispersion as claimed in any of claims 1 to 7, characterized in that the halogenated polymers based on an alkylating aromatic monoalkenyl alkyl halide consist of
80 to 95% by weight dichlorobutadiene, more particularly 2,3-dichloro-1,3-butadiene,
2 to 10% by weight acrylic and/or methacrylic acid and
2 to 10% by weight vinyl benzyl chloride.

**9.** A binder dispersion as claimed in any of claims 1 to 8, characterized in that the halogenated polymers based on an alkylating aromatic monoalkenyl alkyl halide are partly saponified to the corresponding hydroxyalkyl compound.

**10.** Binders as claimed in claims 1 to 9, characterized in that dinitrosobenzenes, more particularly 1,3- and 1,4-dinitrosobenzene, are used as the polyfunctional aromatic nitroso compounds.

## Revendications

**1.** Dispersion aqueuse d'agent liant, exempte d'isocyanates dissimulés, pour la vulcanisation du caoutchouc sur des substrats stables dans les conditions de vulcanisation, constituée de

un copolymère halogéné à base d'un halogénure d'alkyle monoalcénylaromatique à action alkylante,

de composés nitroso aromatiques polyfonctionnels,

de pigments, de suie, d'antimoussants,

d'émulsifiants et d'autres adjuvants, ainsi que

(pour accroître le pouvoir adhésif) d'homo- ou de copolymères de l'acétate vinylique, qui sont partiellement saponifiés.

**2.** Dispersion d'agent liant selon la revendication 1, caractérisée en ce qu'elle contient, par rapport à la totalité de la dispersion:

- 5 à 20 % en poids du copolymère halogéné
- 2 à 20 % en poids des composés nitroso aromatiques polyfonctionnels
- 1 à 15 % en poids de l'acétate vinylique homo- ou copolymère partiellement saponifié,
- 0,2 à 15 % en poids de pigments, suie, antimoussants et/ou autres adjuvants et
- ad 100 % en poids d'eau.

**3.** Dispersion d'agent liant selon l'une des revendications 1 ou 2, caractérisée en ce que l'on met en oeuvre comme copolymères de l'acétate vinylique, des copolymères de l'acétate vinylique avec des oléfines, des oléfines halogénées, des éthers vinyliques, des acides carboxyliques à insaturation oléfinique et/ou des acides dicarboxyliques et/ou leurs esters.

**4.** Dispersion d'agent liant selon l'une des revendications 1 à 3, caractérisée en ce que les homo- ou copolymères de l'acétate vinylique sont saponifiés en alcools polyvinyliques correspondants, à raison de 40 à 98 %, de préférence de 80 à 90 %, des groupes acétates initialement présents.

**5.** Dispersion d'agent liant selon l'une des revendications 1 à 4, caractérisée en ce que les homo- ou copolymères partiellement saponifiés de l'acétate vinylique présentent un poids moléculaire allant de 14 000 à 100 000, de préférence de 30 000 à 75 000.

**6.** Dispersion d'agent liant selon l'une des revendications 1 à 5, caractérisée en ce que les polymères halogénés à base d'un halogénure d'alkyle monoalcénylaromatique alkylant sont constitués de

- 60 à 97 % en poids d'au moins un 2,3-dihalogéno-1,3-butadiène;
- 2 à 33 % en poids d'au moins un halogénure d'alkyle monoalcénylaromatique de formule

I.

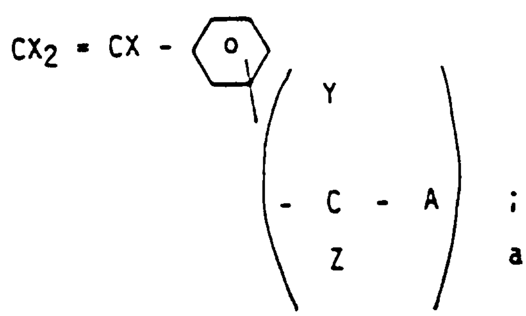

ou

II.

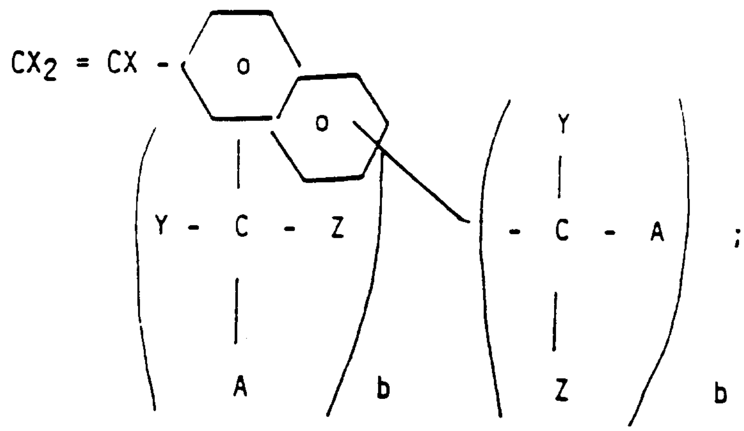

dans laquelle X représente l'hydrogène, le chlore le brome ou l'iode, Y correspond à l'hydrogène, au chlore ou au brome, Z est l'hydrogène, le chlore ou le brome et A représente l'hydrogène, le chlore, le brome ou un groupe alkyle comportant 1 à 3 atomes de carbone, à condition qu'au moins un de Y, Z ou A soit le chlore ou le brome et, si A est un radical alkyle, qu'au moins un de Y ou de Z soit le chlore ou le brome et que a soit égal à un ou à deux et que b soit zéro, un ou deux, à condition qu'au moins un b soit au moins un; et de

- 0,5 à 10 % en poids d'au moins un monomère à insaturation oléfinique, qui est au moins copolymérisable avec les monomères de diènes conjugués et différent de l'halogénure d'alkyle aromatique.

**7.** Dispersion d'agent liant selon l'une des revendications 1 à 6, caractérisée en ce que les polymères halogénés à base d'un halogénure d'alkyle monoalcénylaromatique alkylant renferment comme autres constituants des monomères portant des groupes d'acides carboxyliques.

**8.** Dispersion d'agent liant selon l'une des revendications 1 à 7, caractérisée en ce que les polymères halogénés à base d'un halogénure d'alkyle monoalcénylaromatique alkylant sont constitués de
80 à 95 % en poids de dichlorobutadiène, en particulier de 2,3-dichloro-1,3-butadiène,
2 à 10 % en poids d'acide acrylique et/ou méthacrylique et
2 à 10 % en poids de chlorure de vinylbenzyle.

**9.** Dispersion d'agent liant selon l'une des revendications 1 à 8, caractérisée en ce que les polymères halogénés à base d'un halogénure d'alkyle monoalcénylaromatique alkylant sont partiellement saponifiés en composé hydroryalkylique correspondant.

**10.** Dispersion d'agent liant selon l'une des revendications 1 à 9, caractérisée en ce que l'on utilise comme composés nitroso aromatiques polyfonctionnels, des dinitrosobenzènes, en particulier du 1,3- ou du 1,4-dinitrosobenzène.